# EUROPEAN PATENT APPLICATION

(11) **EP 4 722 891 A1**
(43) Date of publication of application: **08.04.2026**
(21) Application number: 25205750.0
(22) Date of filing: 30.09.2025
(51) Int. Cl.: G06F 3/16, B64D 11/00, G06N 5/043

(54) **ARTIFICIAL INTELLIGENCE BASED IN-FLIGHT ASSISTANTS AND ASSOCIATED SYSTEMS, DEVICES, AND METHODS**

(30) Priority: 04.10.2024 US 202418907428
(71) Applicant: Panasonic Avionics Corporation, Irvine, CA 92612 (US); Panasonic Connect Co., Ltd., Fukuoka Fukuoka-shi 812-8531 (JP)
(72) Inventor: YAMAMURA, Ryotaro, Fukuoka, 812-8531 (JP); ORIKASA, Keiichiro, Fukuoka, 812-8531 (JP); MORI, Yusuke, Fukuoka, 812-8531 (JP); BHARGAVE, Ashish, California, Ashish (US)
(74) Representative: Barker Brettell LLP

(57) **Abstract**

Artificial intelligence (AI)-based in-flight assistants and associated systems, devices, and methods are disclosed herein. In some implementations, an in-flight entertainment and communication (IFEC) system provides an AI-based virtual assistant that a passenger can submit various requests or queries. For example, a passenger can ask the virtual assistant to generate an itinerary for their destination, edit documents stored on their personal laptop, order food or other items mid-flight, reach out to a crew member, check lavatory availability, and more. An AI model onboard the airplane can process these requests and generate responses in real-time, even if offline. The virtual assistant can be visually represented by an assistant graphical character on a display and talk to the passenger. Thus, the AI-based virtual assistant can provide an improved in-flight user experience compared to conventional IFEC systems.

## Description

### CROSS-REFERENCE TO RELATED APPLICATIONS

This application claims priority to, and the benefit of, U.S. Patent Application No. 18/907,428, titled "ARTIFICIAL INTELLIGENCE BASED IN-FLIGHT ASSISTANTS AND ASSOCIATED SYSTEMS, DEVICES, AND METHODS", filed on October 4, 2025. The content of the foregoing application is incorporated herein in its entirety by reference

### TECHNICAL FIELD

This document is directed generally to artificial intelligence-based in-flight assistants and associated systems, devices, and methods.

### BACKGROUND

Air travel typically involves journeys over extended distances that at the very least take several hours to complete. Some of the longer non-stop international flights have scheduled durations of over sixteen hours with travel distances extending beyond ten thousand miles. Passengers on board the aircraft are confined within an enclosed space of a designated seat for the entire duration of the flight, with only a few limited opportunities to leave the seat for use of the lavatory and so forth. Thus, even on the shortest trips, there is a need in the art for improved in-flight services.

### BRIEF DESCRIPTION OF THE DRAWINGS

Features, aspects, and advantages of the presently disclosed technology may be better understood with regard to the following drawings.
FIG. 1 shows an example of an in-flight entertainment and communications system installed in an airplane based on some implementations of the disclosed technology.
FIG. 2 shows an example block diagram of a computing device based on some implementations of the disclosed technology.
FIG. 3 is a schematic diagram of an in-flight entertainment and communication system that can provide an artificial intelligence based in-flight assistants based on some implementations of the disclosed technology.
FIG. 4 is a schematic diagram of an in-flight entertainment and communications devices operating with artificial intelligence based in-flight assistants based on some implementations of the disclosed technology.
FIG. 5 is a flowchart illustrating a method for providing an artificial intelligence-based in-flight assistant on an airplane based on some implementations of the disclosed technology.

A person skilled in the relevant art will understand that the features shown in the drawings are for purposes of illustrations, and variations, including different and/or additional features and arrangements thereof, are possible.

### DETAILED DESCRIPTION

### I. Overview

Various implementations of the disclosed technology provide techniques for providing artificial intelligence (AI) based in-flight assistants on in-flight entertainment and communications (IFEC) systems and devices on airplanes. IFEC systems and devices installed on airplanes today do not have any built-in intelligence, and can only provide, in response to user inputs, a predetermined set of content (e.g., movies, TV shows, music, flight tracking) that are either already stored in onboard servers of the airplane or transmitted from a ground-based server. Moreover, conventional IFEC systems and devices receive user inputs via physical buttons on a remote or seat, or digital buttons on a touchscreen. These limited forms of content availability and user input constrain the quality of in-flight services and the associated user experience that can be provided to passengers. Moreover, while flight attendants are also available to assist passengers in various ways, there are numerous in-flight services that would be better provided by, or even exclusive to, IFEC systems and devices. The disclosed technology, detailed further below, address at least some of these drawbacks of conventional IFEC systems and devices.

In some implementations of the present technology, an IFEC system provides an AI-based virtual and conversational assistant that a passenger can talk to and submit various requests or queries. For example, a passenger can ask the virtual assistant to generate an itinerary for their destination, edit documents stored on their personal laptop, order food or other items mid-flight, reach out to a crew member, check lavatory availability, and more. An AI model onboard the airplane can process these requests or queries and generate responses in real-time. The IFEC system can include IFEC devices including microphones, speakers, and displays such that the virtual assistant can be visually represented by a character on the display and talk to the passenger through the microphones and speakers. Thus, the AI-based virtual assistant can provide an improved in-flight user experience in which the passenger can feel like they are talking to an intelligent, live entity that can provide a much wider range of services compared to conventional IFEC systems. In some implementations, the character displayed to represent the assistant can be customized to further personalize the user experience.

In some implementations of the present technology, a method for providing an AI-based in-flight assistant on an airplane is disclosed. The method can begin by receiving a query from a passenger on an airplane, where the query is received as a user input. The method can continue by converting the user input to a text input, and transmitting the text input to an AI model. The AI model can be implemented by at least one processor and at least one memory included in an onboard server. The artificial intelligence model can be generated from training data sets tuned using queries from airplane passengers. The method can continue by generating, by the AI model and in real-time, a response to the query, where the response is generated as a text output. The method can continue by converting the text output to an audio output and transmitting the audio output to the passenger. The method can continue by displaying an assistant graphical character to the passenger, where animation of the assistant graphical character is synchronized with the audio output.

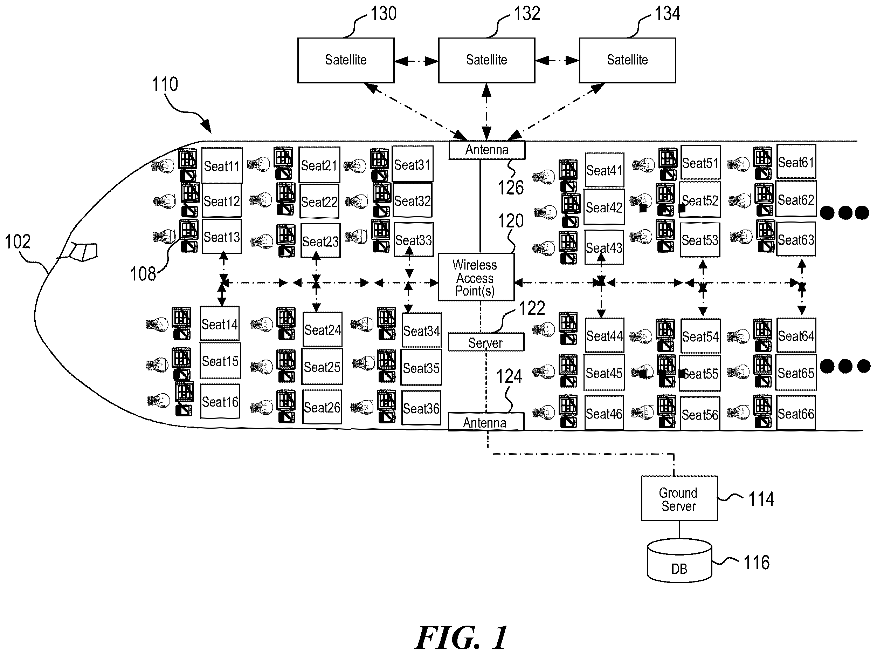

FIG. 1 shows an example of an in-flight entertainment and communications (IFEC) system 110 installed in an airplane 102 based on some implementations of the disclosed technology. The IFEC system 110 includes a plurality of in-flight entertainment (IFE) devices 108, which can provide various entertainment and connectivity services, including video and audio streaming and Internet communications, to passengers on board. For example, the IFE devices 108 can include such as monitors, handsets, ports for transferring audio/power/data, etc. The IFE devices 108 can also communicate or otherwise interact with personal electronic devices (PEDs) carried by passengers. PEDs may refer to any electronic computing device that includes one or more processors or circuitries for implementing the functions related to data storage, video and audio streaming, wired communications, wireless communications, etc. Examples of the PEDs include cellular phones, smart phones, tablet computers, laptop computers, and other portable computing devices. In implementations of the disclosed technology, PEDs may have the capability to execute application software programs ("apps") to perform various functions and/or communicate with the IFE devices 108.

In the illustrated embodiment, the passenger seats are individually labeled Seat11 to Seat66. In some implementations, the IFE devices 108 are provided at each passenger seat, such as located at each of the seatbacks of the passenger seats, and/or on cabin walls and/or deployable from an armrest for seats located at a bulkhead (i.e., in the first row of a section). The IFE devices 108 can include displays providing interfaces to each passenger through which each passenger enters their selections on the entertainment option, e.g., the particular selections, emergency requests, etc. The IFE devices 108 can also include microphones into which each passenger makes their request for specific content or other services. Upon receiving the selection or request from the passengers, based on the selections or requests from the passengers, the IFE devices 108 can display entertainment content and travel information, or provide other in-flight services.

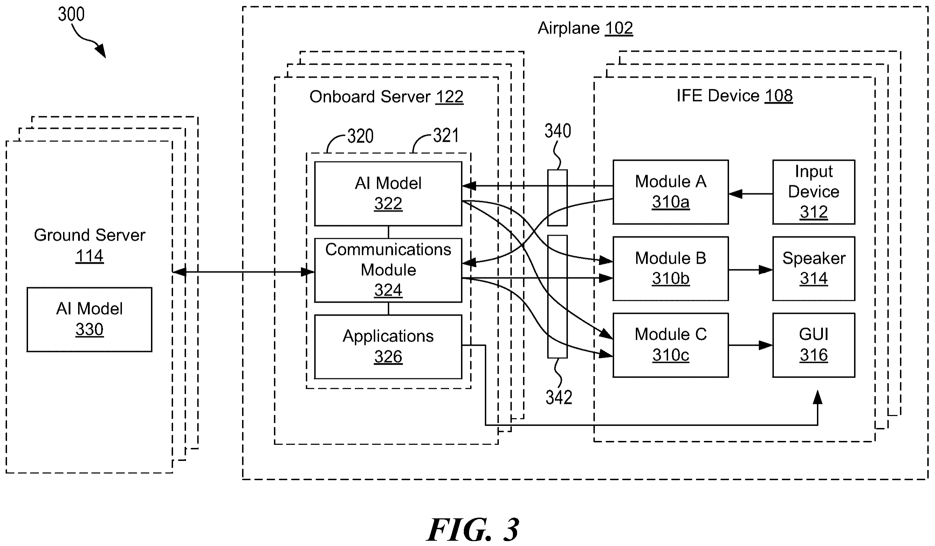

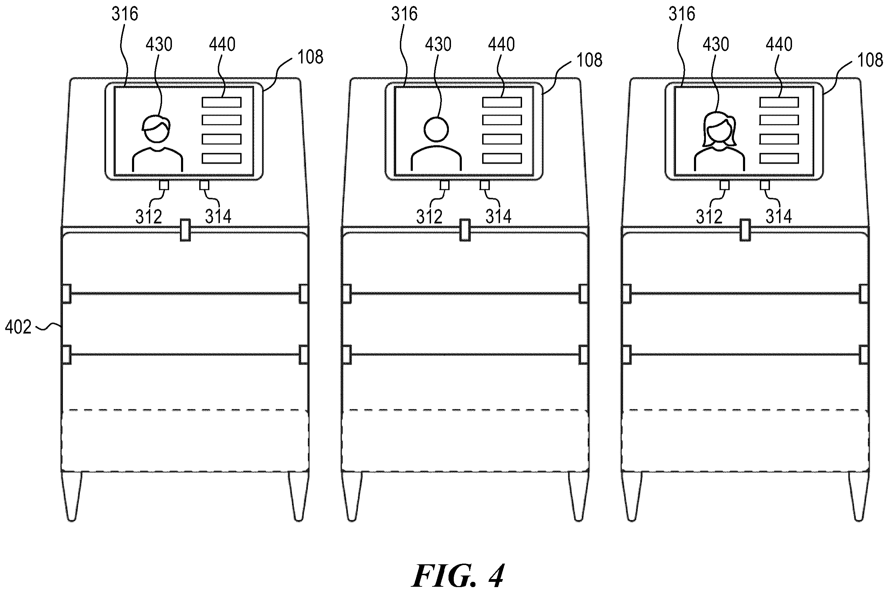

A server 122 can be communicably coupled with the IFE devices 108 and/or the PEDs via one or more wireless access points 120, and perform various operations including providing an AI-based in-flight assistant as discussed with reference to FIGS. 3 and 4. The communications between the server 122, the IFE devices 108, and the PEDs are realized by wired and/or wireless connections. In some implementations, the communication among the server 122, the IFE devices 108, and the PEDs are achieved through the antenna 124 to and from a ground-based server 114 and/or ground-based cell towers by, for example, a provision of network plugs at the seat for the IFE devices 108 to a wired onboard local area network. In some other implementations, the communications among the server 122, the IFE devices 108, and the PEDs are achieved through the antenna 126 to and from satellites 130, 132, 134 in an orbit (e.g., via a cellular network utilizing one or more onboard base station(s), Wi-Fi utilizing the wireless access point 120, and/or Bluetooth).

The server 122, the IFE devices 108, and the PEDs form a local network on board the airplane 102 through an onboard router (not shown). The server 122 is also communicably coupled with the ground server 114 through the antenna 124 for receiving and transmitting information from/to the ground server 114. The ground server 114 can be located at various locations, such as a computer center at an arbitrary location on the ground, etc. The ground server 114 may be in communication with a database 116, provide information from the database 116 to the server 122, and store information received from the server 122 in the database 116. Although FIG. 1 shows that the database 116 is provided separately from the ground server 114, the database 116 can be provided as a part of the ground server 114.

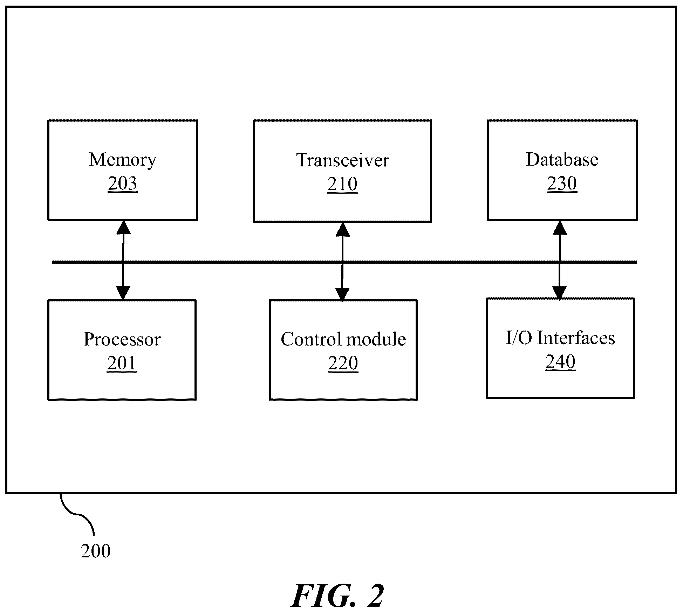

FIG. 2 shows an example block diagram of a computing device 200 (e.g., an onboard server, a ground server, or a portable server) based on some implementations of the disclosed technology. The computing device 200 includes at least one processor 201, a memory 203, a transceiver 210, a control module 220, a database 230, and an input/output (I/O) interface 240. In other embodiments, additional, fewer, and/or different elements may be used to configure the computing device 200. The memory 203 may store instructions and applications to be executed by the processor 201. The memory 203 is an electronic holding place or storage for information or instructions so that the information or instructions can be accessed by the processor 201. The memory 203 can include, but is not limited to, any type of random access memory (RAM), any type of read-only memory (ROM), any type of flash memory, such as magnetic storage devices (e.g., hard disk, floppy disk, magnetic strips, etc.), optical disks (e.g., compact disc (CD), digital versatile discs (DVD), etc.), smart cards, flash memory devices, etc. The instructions upon execution by the processor 201 configure the computing device 200 to perform the operations (e.g., the operations as shown in and described with reference to FIGS. 3-5), which will be described in this patent document. The instructions executed by the processor 201 may be carried out by a special purpose computer, logic circuits, or hardware circuits. The processor 201 may be implemented in hardware, firmware, software, or any combination thereof. The term "execution" is, for example, the process of running an application or the carrying out of the operation called for by an instruction. The instructions may be written using one or more programming language, scripting language, assembly language, etc. By executing the instruction, the processor 201 can perform the operations called for by that instruction.

The processor 201 operably couples with the memory 203, the transceiver 210, the control module 220, the database 230, and the I/O interface 240, to receive, send, and process information and to control the operations of the computing device 200. The processor 201 may retrieve a set of instructions from a permanent memory device, such as a ROM device, and copy the instructions in an executable form to a temporary memory device that is generally some form of RAM. In some implementations, the computing device 200 can include a plurality of processors that use the same or a different processing technology. The transceiver 210 may include a transmitter and a receiver. In some embodiments, the device 200 comprises a transmitter and a receiver that are separate from one another but functionally form a transceiver. The transceiver 210 transmits or sends information or data to another device (e.g., the IFE devices 108, a reader device, etc.) and receives information or data transmitted or sent by another device (e.g., another server, a PED, etc.).

The control module 220 of the computing device 200 is configured to perform operations to assist the computing device 200. In some implementations, the control module 220 can be configured as a part of the processor 201. When the computing device 200 communicates with the IFE devices 108 in FIG. 1, the control module 220 can be included in the airplane 102. In some implementations, the control module 220 can operate machine learning/artificial intelligence (AI) applications that perform various types of data analysis to automate analytical model building. Using algorithms that iteratively learn from data, machine learning applications can enable computers to learn without being explicitly programmed. The machine learning/AI module may be configured to use data learning algorithms to build models to interpret various data received from the various devices or components to detect, classify, and/or predict future outcomes. Such data learning algorithms may be associated with rule learning, artificial neural networks, inductive logic programming, and/or clustering. In some implementations, the control module 220 may assist the computing device 200 to perceive their environment and take actions that maximize the effectiveness of the operations performed by the computing device 200.

The I/O interfaces 240 enable data to be provided to the computing device 200 as input and enable the computing device 200 to provide data as output. In some embodiments, the I/O interfaces 240 may enable user input to be obtained and received by the computing device 200 (e.g., via a touch-screen display, buttons, or switches) and may enable the computing device 200 to display information. In some embodiments, devices, including touch screen displays, buttons, controllers, audio speakers, or others, are connected to the computing device 200 via I/O interfaces 240.

In some implementations, the computing device 200 comprises a computer-readable medium (e.g., the memory 203) including processor instructions that, when executed by one or more processors (e.g., the processor 201), cause the one or more processors to provide an AI-based in-flight assistant and associated services as described in further detail below with reference to FIGS. 3-5.

### II. Select Implementations of an AI-Based In-Flight Assistant

FIG. 3 is a schematic diagram of an in-flight entertainment and communication (IFEC) system 300 that can provide an artificial intelligence based in-flight assistants based on some implementations of the disclosed technology. As discussed above with reference to FIG. 1, the airplane 102 includes a plurality of in-flight entertainment (IFE) devices 108 and one or more onboard servers 122 operably coupled to the IFE devices 108. The onboard servers 122 can also communicate wirelessly with the one or more ground servers 114 while the airplane 102 is in flight or on the ground.

Each IFE device 108 can include one or more modules (individually labeled module A 310a, module B 310b, and module C 310c) (collectively referred to as "the modules 310"), a multimodal user input device 312 (e.g., a microphone for receiving voice input, a camera for detecting hand gestures, body gestures, and/or facial expressions, a keyboard for receiving text input), a speaker 314 (or other audio output device, such as an audio jack), and a graphical user interface (GUI) 316. Each IFE device 108 can include additional or alternative components, such as a remote controller, USB ports, power outlets, etc. Each module 310 can comprise a processor or other programmable unit coupled to process data received from or transmitted to other components included in the IFE devices 108 (e.g., the user input device 312, the speaker 314, the GUI 316). In some implementations, the module A 310a comprises an input recognition module (e.g., a voice recognition module, a hand and/or body gesture recognition module, a processor for recognizing inputs on a physical or touchscreen-based keyboard). In some implementations, the module B 310b comprises a voice synthesis module. In some implementations, the module C 310c comprises an audio-video processor.

The onboard servers 122 can include at least one processor 320 and at least one memory 321. The at least one processor 320 and the at least one memory 321 can implement an artificial intelligence (AI) model 322, a communications module 324, and one or more applications 326. In some implementations, however, the AI model 322 is implemented additionally or alternatively implemented on the individual IFE devices 108 (e.g., on the processor(s) and the memory(s) thereof). The AI model 322 (e.g., a machine learning (ML) model) can trained to provide an AI-based in-flight assistant that can interact with individual passengers to provide various services and a customized user experience. An "AI model" or "ML model" as used herein refers to a construct that is trained using training data to make predictions or provide probabilities for new data items, whether or not the new data items were included in the training data. For example, training data for supervised learning can include positive and negative items with various parameters and an assigned classification. A new data item can have parameters that a model can use to assign a classification to the new data item. As another example, a model can be a probability distribution resulting from the analysis of training data, such as a likelihood of an event occurring in a given timeframe based on an analysis of a large corpus of events with corresponding times. Examples of models include: neural networks, support vector machines, decision trees, Parzen windows, Bayes, clustering, reinforcement learning, probability distributions, decision trees, decision tree forests, and others. Models can be configured for various situations, data types, sources, and output formats.

The communications module 324 can enable communication between the AI model 322, the applications 326, various components included in the IFE devices 108, and the ground servers 114. The communication can be based on wired connections (e.g., for communications with the AI model 322, the IFE devices 108) and/or wireless connections such as Internet-based, satellite-based, or cellular network-based (e.g., for communications with the ground servers 114). The one or more applications 326 can comprise software programs for playing multimedia content (e.g., movies, TV shows, music), tracking flights, in-flight shopping, etc. The applications 326 can obtain the necessary content from databases onboard the aircraft (not shown) or from the ground servers 114.

In operation, the AI model 322 interacts with passengers via the IFE devices 108 (e.g., using APIs) by operating a digital in-flight assistant. Individual passengers can make requests to the AI model 322 via a voice input, a text input, an image input (e.g., hand gestures, body gestures, and/or facial expressions), a selection of a feature on the GUI 316 (e.g., a touchscreen), etc. For example, a passenger can verbally make a request through the user input device 312 (e.g., a microphone) and the module A 310a (e.g., a voice recognition module) can process and convert the audio input to a text input in real-time. In another example, a passenger can make a request using hand and/or body gestures through the user input device (e.g., a camera) and the module A 310a (e.g., a gesture recognition module). In yet another example, a passenger can make a request by mouthing words through the user input device (e.g., a camera) and the module A 310a (e.g., a lip reading module). The converted text input can then be communicated to the AI model 322 directly or indirectly via the communications module 324. In some implementations, the text input is processed by an inquiry filtering algorithm 340 prior to reaching the AI model 322. The inquiry filtering algorithm 340 can filter the text input by, for example, rewording the text input into a text form more suitable for input into the AI model 322. The inquiry filtering algorithm 340 can be implemented on the individual IFE devices 108 and/or on the onboard server 122 (e.g., on the processor(s) and memory(s) thereof).

In some embodiments, the AI model 322 processes information proactively and without a user request. For example, upon initial user consent, the user input device 312 can include a camera or other image sensor that feeds image information to the AI model 322 (e.g., continuously, regularly, at predetermined time intervals, sporadically). The camera can capture images of the passenger's face for emotion analysis, health analysis, personality analysis, enhanced personalization, and/or other forms of data processing by the AI model 322. The AI model 322 can then generate information about the passenger and use the generated information to improve the passenger's user experience. In some embodiments, the AI model 322 can perform the above-listed processing in response to a user request.

The AI model 322 can then process the input, generate a response, and output the generated response in various forms (e.g., in text form via natural language processing, in image form). The module B 310b (e.g., a voice synthesis module) can receive, process, and convert the output from the AI model 322 into speech, which can be communicated to the passenger via the speaker 314 or headphones plugged into an audio jack included in the IFE device 108. The module C 310c (e.g., an audio-video processor) can generate and display an assistant graphical character on the GUI 316, as discussed in further detail below with reference to FIG. 4. The assistant graphical character can serve as a visual representation of the digital AI-based in-flight assistant generated and operated by the AI model 322. The module C 310c can also receive the output from the AI model 322 and synchronize with the module B 310b such that the assistant graphical character displayed on the GUI 316 syncs with the audio output through the speaker 314. For example, the assistant graphical character's facial expression, body movement, mouth shape, etc. can match the speech output from the speaker 314 in real-time. Therefore, by operating a digital in-flight assistant that interacts with the passenger by voice, the AI model 322 can create a user experience in which the passenger feels like they are talking to an intelligent character or entity as opposed to interacting with simply a touchscreen or other conventional user interface. Additionally or alternatively, the AI model 322 can generate and output images and/or graphics such as automatically generated illustrated books, movies, maps, itineraries, photographs, and other forms of media.

In one example, a passenger may request information regarding their flight and/or destination, such as a map of the airport at which the passenger has a layover and a corresponding navigation guide (e.g., gate-to-gate), a recommended itinerary for their destination, real-time information on any relevant flight delays, transportation options at their destination, etc.

In another example, a passenger may request document processing services, such as document generation, document editing, document summarization, etc. Documents can include text-based documents, presentation slides, image-based documents, etc. In some cases, the passenger may operably connect their PED (e.g., smartphone, laptop, tablet) to the IFE device 108 via a USB port or a wireless connection (e.g., Bluetooth) and request the AI model 322 to extract, edit, or add documents on the PED. In some cases, the passenger may grant the AI model 322 temporary and/or limited access to data (e.g., documents) stored on a ground server 114 (e.g., Google Drive) such that the AI model 322 can extract, edit, or add documents on that ground server via the communications module 324. In some implementations, the AI model 322 can transfer documents between that ground server 114 and the PED.

In another example, a passenger may request information or services pertaining to in-flight comfort, such as lavatory availability, meal and snack options, seat lighting control, etc. In some cases, the passenger may inform the AI model 322 of any allergies or food requests, and the AI model 322 can cross-reference with the food items on the menu to alert or notify the passenger and/or crew members as necessary. In some cases, the passenger may request that the AI model 322 notify them when a lavatory becomes available for use.

In another example, a passenger may request information or services pertaining to in-flight entertainment, such as a list of currently available action movies, a personalized list of recommended movies or shows, etc. The AI model 322 can identify available IFE options by communicating with the applications 326 and/or by reading data directly from an onboard database. In some cases, the passenger may simply request the AI model 322 to play a particular movie or song.

In other examples, a passenger may interact with the AI model 322 in other ways, such as by shopping, making a request to a crew member, etc. In some cases, the passenger may request the AI model 322 to display a list of items available for purchase that satisfy one or more conditions (e.g., a specific category such as bags, within a specified price range, etc.). In some cases, the passenger may ask the AI model 322 to request a crew member to bring a blanket (or other item) to the passenger, which can save the crew member time spent on, for example, walking to the passenger to hear the request for the blanket and walking back.

In some implementations, the output of the AI model 322 is processed by a time management and prioritization algorithm 342 prior to reaching the module B 310b and the module C 310c. The time management and prioritization algorithm 342 can account for processing times and resources before transmitting the response to passengers. For example, when presented with multiple requests from multiple passengers, the time management and prioritization algorithm 342 determines an order in which to fulfill the passenger requests. The time management and prioritization algorithm 342 can be based on the nature of the request, the passenger who made the request, the order in which the requests were submitted, etc. For example, a request for a blanket to be brought to the passenger may be prioritized and fulfilled before a request for a vacation itinerary, even if the latter request was submitted first. In some implementations, the AI model 322 and/or the time management and prioritization algorithm 342 additionally determines how much computing resources to dedicate to fulfilling a particular request. Given the limited computing power available onboard the airplane 102, it can be important to properly allocate the available computing resources. The time management and prioritization algorithm 342 can be implemented on the individual IFE devices 108 and/or the onboard servers 122 (e.g., on the processor(s) and the memory(s) thereof). For example, the time management and prioritization algorithm 342 can be included in the AI model 322.

In some implementations, the AI model 322 can directly assist crew members as well as passengers. For example, the AI model 322 may have access to a large amount of data relating to the airplane 102, such as the current flight path, anticipated flight path, temperature, cabin pressure, lighting control, emergency operations, etc. Crew members can interact with the AI model 322, through user interfaces dedicated to crew members, to manage various aspects of operating the airplane 102 and better attend to passengers.

In some implementations, the AI model 322 is fully integrated in the onboard servers 122 such that the AI-based in-flight assistant can interact with the passengers without the need to interact with any servers or other components external to the airplane 102. In other words, the AI model 322 can work fully offline. "Complete" AI models today, such as ChatGPT, rely on the availability of extensive server infrastructure and cloud computing resources, which are impractical to support onboard an airplane given the weight, size, energy, and other considerations. Therefore, in some implementations, the AI model 322 is trained using training data specific to situations expected or otherwise associated with passengers riding an airplane, and/or trained based on a list of "frequently asked questions" from airplane passengers. For example, the AI model 322 can be trained to generate recommended itineraries, recommend movies, interact with PEDs connected to the IFE devices 108, provide flight- and/or destination-related information and services, etc. By selectively training the AI model 322 based on queries expected from, typical for, and/or unique to passengers on an airplane, the computational resources (e.g., memory and processing requirements) needed to support the AI model 322 fully offline on the onboard servers 122 can be significantly reduced.

In some implementations, the AI model 322 is trained prior to being loaded onto the onboard servers 122. In some implementations, the AI model 322 is further trained using additional training data sets while the airplane 102 is on the ground, such as during maintenance. Updating the AI model 322 can occur on a routine basis and/or as needed. In some implementations, the AI model 322 can continue to be trained while deployed on the airplane 102 by using actual passenger interactions as additional training data.

In some implementations, the AI model 322 and/or the inquiry filtering algorithm 340 can delegate certain tasks or portions of tasks to a different AI model 330 on the ground servers 114. Because the ground servers 114 can support much greater memory and processing power, the AI model 330 on the ground servers 114 can be a "complete" or "high-performance" AI model or otherwise more extensive and capable than the AI model 322 on the onboard servers 122. When a passenger makes a request and the AI model 322 and/or the inquiry filtering algorithm 340 determines that the request would be better handled by the AI model 330 and/or determines that it (the AI model 322 itself) is unsuited to handle the request (e.g., the request is beyond the scope of the training of the AI model 322, the initially generated response has a confidence score less than a predetermined threshold, a lot of other passengers are already using a bulk of the computational resources of the AI model 322, etc.), the AI model 322 can delegate the entirety or a portion of the request to the AI model 330 (e.g., transmitted wirelessly as text tokens). The AI model 330 can then generate and communicate a response to the passenger via the communications module 324. The passenger may or may not be notified that the response or a portion thereof was generated by an AI model not on the airplane 102. In some implementations, the responses from the AI model 330 is processed by the time management and prioritization algorithm 342 in a similar manner to the responses from the AI model 322 as discussed above.

In some implementations, the AI model 322 and/or the inquiry filtering algorithm 340 can determine whether and how to delegate a request to the AI model 330 on the ground servers 114. For example, the AI model 322 and/or the inquiry filtering algorithm 340 can consider various factors such as memory availability of the onboard servers 122, processing power availability of the onboard servers 122, the nature of the request, the availability and stability of bandwidth for wirelessly communicating with the ground servers 114 while the airplane 102 is mid-flight, a comparison between the expected response time of the AI model 322 and of the AI model 330 while also considering any communication delays between the communications module 324 and the ground servers 114, etc.

One of ordinary skill in the art will appreciate that the need to do so arises from a technical problem unique to airplanes and other flying vehicles. As previously mentioned, airplanes may not be able to support an AI model that is both "complete" and fully offline. Therefore, the airplane may need to communicate with a "complete" AI model on one or more ground-based servers. However, wirelessly communicating with ground-based servers while the airplane is mid-flight poses several technical challenges, such as stability issues in light of weather conditions and/or the altitude and speed of the airplane, bandwidth limitations, regulatory and safety concerns, etc. Moreover, simply including better hardware may raise additional issues such as cost, weight, cooling, and energy consumption. Therefore, the ability of the AI model 322 to determine whether and how to delegate a request (or a portion thereof) to other models in the ground servers 114 comprises a technical solution to a technical problem.

FIG. 4 is a schematic diagram of the IFEC devices 108 operating with artificial intelligence based in-flight assistants based on some implementations of the disclosed technology. In the illustrated embodiment, each seatback 402 includes a set of IFEC devices 108 including the user input device 312, the speaker 314 (or audio jack), and the GUI 316. Also, each GUI 316 is shown displaying an assistant graphical character 430 and one or more user interface options 440.

The assistant graphical character 430 can serve as a visual representation of the AI model 322 (FIG. 3) such that the passenger is provided with a user experience in which the passenger feels like they are interacting with a live and intelligent being. The assistant graphical character 430 can be illustrated and animated using one or more of various known image illustration and animation techniques, such as Live2D, generative art, 3D modeling, pixel art, vector graphics, digital painting, photo-editing, etc. As discussed above with reference to FIG. 3, the module C 310c can synchronize with the module B 310b such that animation of the assistant graphical character 430 matches the voice output via the speaker 314 to better simulate a live in-flight assistant. For example, the shape of the mouth, the facial expression, the body language, and other characteristics of the assistant graphical character 430 can be programmed to match the words pronounced and the speed of the speech output via the speaker 314.

In some implementations, the assistant graphical character 430 and various features thereof can be customized by the passenger. For example, the passenger can customize the appearance of the assistant graphical character 430 by choosing among default options, building their own character from scratch or by editing a base model, etc. In another example, the passenger can customize the speech of the assistant graphical character 430 by changing the talking speed, the accent, the voice tone, the language, etc. In yet another example, the passenger can customize the assistant graphical character 430 to cater to a certain age group, such as by configuring the AI model 322 to use age-appropriate words for young passengers. In some implementations, the voice output by the speaker 314 can be automatically updated to reflect the selection or customization of the assistant graphical character 430. For example, if a passenger selects an assistant graphical character 430 with a human appearance, the voice of the passenger can be set to simulate the voice of an actual person. On the other hand, if a passenger selects an assistant graphical character 430 with an animal-like appearance (e.g., a cartoon character), the voice of the passenger can be set or simulate the voice of that character (or what would be expected of it).

The user interface options 440 may be selected via touching or voice commands, and can allow the passenger to customize the assistant graphical character 430 as discussed above. In some implementations, the user interface options 440 include an option to activate or deactivate the user input device 312. In some implementations, the user interface options 440 include an option to turn on or off or change the volume of the speaker 314. In some implementations, the user interface options 440 include an option to turn on or off captions that display the words spoken by the assistant graphical character 430 in text. In some implementations, the user interface options 440 include options to select from a list of frequently used, anticipated, or other list of queries (e.g., "What movies do you recommend?," "Can you call a crew member for me?," "Is a lavatory available?"). In some implementations, the user interface options 440 include options to interact with the IFE device 108 in a conventional manner, such as by swiping through a list of available movies and TV shows.

As generally indicated by the examples given above with respect to FIG. 3, the AI model 322 can fulfill numerous types of requests that may not be fulfilled by conventional IFE devices and/or crew members, or can facilitate interaction with the IFE devices 108 and/or the crew members. For example, because the AI model 322 has access to a large database of information, including information about specific passengers, and can make intelligent decisions, the AI model 322 can make movie recommendations that are personalized. Similarly, creating detailed itineraries for a 2-week vacation may be extremely difficult, if not impossible, for a human to do. Furthermore, the AI model 322 can provide such services by quickly processing information in real-time while simulating a live assistant that interacts with the passenger via voice and/or text without significant delay, thus providing a more personal and improved user experience. Additionally, the ability to perform these tasks offline allows the AI model 322 to operate the AI-based in-flight assistant at any point in time, without regard to Internet connectivity, and without noticeable processing delay.

Also, by presenting itself as the assistant graphical character 430 that can listen and talk with the passengers, the AI-based in-flight assistant can help provide these various services in a much more personal and conversational manner than conventional IFE devices can. The ability to customize the appearance, voice, and other features of the AI-based in-flight assistant adds to providing a personalized user experience.

The AI-based in-flight assistant is further expected to save crew members time and effort, and associated costs to airlines, by performing certain tasks in place of the crew members and/or assisting the crew members perform such tasks. For example, the AI-based in-flight assistant can streamline the process for passengers to order and confirm meals by allowing the passengers to interact with the AI-based in-flight assistant instead of a crew member. Additionally, as developments in artificial intelligence technology continue to emerge, they can be integrated into the AI-based in-flight assistant as deemed appropriate, enabling a virtual assistant that continues to improve.

### III. Methods for Providing an AI-Based In-Flight Assistant

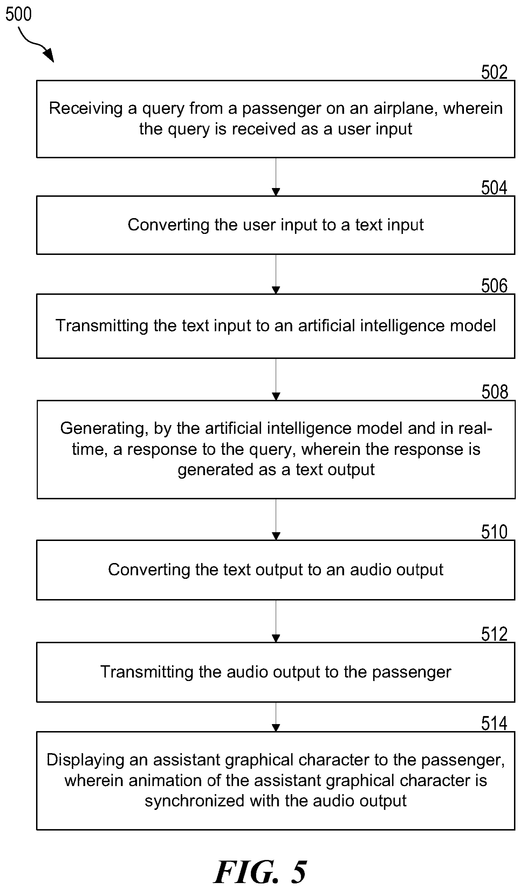

FIG. 5 is a flowchart illustrating a method 500 for providing an artificial intelligence-based in-flight assistant on an airplane based on some implementations of the disclosed technology. In some implementations, some or all of the steps of the method 500 described below are performed by at least one processor executing instructions stored on a computer-readable medium onboard an airplane. While the method 500 is described below with reference to FIGS. 1-4, they are by way of example only, and the method 500 can be practiced with other implementations of the present technology.

The method 500 begins at block 502 by receiving a query from a passenger on an airplane (e.g., the airplane 102), wherein the query is received as a user input (e.g., via the user input device 312). At block 504, the method continues by converting the user input to a text input (e.g., by the input recognition module 310a). At block 506, the method continues by transmitting the text input to an artificial intelligence model (e.g., the AI model 322). The artificial intelligence model can be implemented by at least one processor (e.g., the at least one processor 320) and at least one memory (e.g., the at least one memory 321) included in an onboard server (e.g., the onboard server 122). The artificial intelligence model can be generated from training data sets tuned using queries from airplane passengers.

At block 508, the method continues by generating, by the artificial intelligence model and in real-time, a response to the query, wherein the response is generated as a text output. At block 510, the method continues by converting the text output to an audio output (e.g., by the voice synthesis module 310b). At block 512, the method continues by transmitting the audio output to the passenger (e.g., via the speaker 314). At block 514, the method continues by displaying (e.g., on the GUI 316) an assistant graphical character (e.g., the assistant graphical character 430) to the passenger, wherein animation of the assistant graphical character is synchronized with the audio output.

In some implementations, the artificial intelligence model generates the output in other forms, such as in image or graphical form that can be displayed to the passenger. In some implementations, generating the response to the query comprises generating the response to the query while the onboard server is in a fully offline mode. In some implementations, the method 500 further includes determining how to delegate the query received from the passenger between the artificial intelligence model and a ground-based artificial intelligence model, the ground-based artificial intelligence model generated from training data sets tuned using general queries from users, and delegating at least a portion of the query to the ground-based artificial intelligence model.

In some implementations, the method 500 further includes receiving a plurality of queries from a plurality of passengers, determining an order in which to respond to the plurality of queries, and responding to the plurality of queries based on the determined order.

In some implementations, the query comprises a request to generate a summary of a first document stored on a personal electronic device and add the generated summary to a second document stored on a personal electronic device. In some implementations, the method 500 further includes generating a summary of the first document and adding the generated summary to the second document. In some implementations, the response to the query comprises a notification that the request has been completed.

In some implementations, the query comprises a request to generate an itinerary for a destination of the passenger. In some implementations, the method 500 further includes generating an itinerary for the destination of the passenger. In some implementations, the response to the query comprises the generated itinerary.

While FIG. 5 and the corresponding description above describes the steps of the method 500 in a particular order, one of ordinary skill in the art will appreciate that at least some of the steps can be performed in a different order. Also, the method 500 can omit one or more of the steps described herein and/or include additional steps. Moreover, while the discussion above is generally directed towards providing an AI-based in-flight assistant on an airplane, one of ordinary skilled in the art will appreciate that embodiments of the present technology can be implemented in other settings, such as on ships, on trains, on cars or trucks, on ground, on spacecraft, etc.

### IV. Example Technical Solutions

In accordance with the disclosed technology herein, some embodiments may incorporate technical solutions as provided in the following examples:
1. An in-flight entertainment and communication system for providing an artificial intelligence-based in-flight assistant on an airplane, the system comprising: an onboard server including at least one processor and at least one memory configured to implement an artificial intelligence model, the artificial intelligence model generated from training data sets tuned using queries from airplane passengers; and an in-flight entertainment and communication (IFEC) device operably coupled to the onboard server and positioned to interact with a passenger, the IFEC device including: a user input device; an input recognition module coupled to receive user input from the user input device, convert the user input to a text input, and transmit the text input to the artificial intelligence model; an audio output device; a voice synthesis module coupled to receive text output from the artificial intelligence model, convert the text output to an audio output, and transmit the audio output to the audio output device; a graphical user interface; and an audio-video processor coupled to generate and display an assistant graphical character on the graphical user interface, wherein the audio-video processor is configured to synchronize with the voice synthesis module such that animation of the assistant graphical character is synchronized with the audio output, wherein the artificial intelligence model is configured to: receive a query from the passenger via the input recognition module; and respond to the query in real-time by managing the assistant graphical character and the audio output via the voice synthesis module and the audio-video processor.
2. The system of any one of the examples herein, wherein the artificial intelligence model is configured to respond to the query while the onboard server is in a fully offline mode.
3. The system of any one of the examples herein, wherein the onboard server further comprises a communications module operably coupled to the at least one processor and configured to communicate with a ground-based artificial intelligence model, the ground-based artificial intelligence model generated from training data sets tuned using general queries from users, wherein the at least one processor is configured to determine how to delegate the query received from the passenger between the artificial intelligence model on the onboard server and the ground-based artificial intelligence model.
4. The system of example 3, wherein the at least one processor is configured to determine how to delegate the query based on at least one of memory space availability of the at least one memory, processing power availability of the at least one processor, a nature of the query, availability and stability of bandwidth for wirelessly communicating with the ground-based artificial intelligence model while the airplane is mid-flight, a comparison between an expected response time of the artificial intelligence model on the onboard server and an expected response time of the ground-based artificial intelligence model, or communication delays between the communications module and the ground-based artificial intelligence model.
5. The system of any one of the examples herein, wherein the artificial intelligence model is configured to: receive a plurality of queries from a plurality of passengers; determine an order in which to respond to the plurality of queries; and respond to the plurality of queries based on the determined order.
6. The system of example 5, wherein the artificial intelligence model is configured to determine the order in which to respond to the plurality of queries based on at least one of natures of the queries, identities of the passengers, or an order in which the queries were received.
7. The system of example 5, wherein the artificial intelligence model is further configured to determine how to delegate processing power of the at least one processor between the queries.
8. The system of any one of the examples herein, wherein the graphical user interface is configured to receive inputs from the passenger to customize at least one of an appearance of the assistant graphical character or a voice of the audio output.
9. A method of providing an artificial intelligence-based in-flight assistant on an airplane, the method comprising: receiving a query from a passenger on an airplane, wherein the query is received as a user input; converting the user input to a text input; transmitting the text input to an artificial intelligence model, wherein the artificial intelligence model is implemented by at least one processor and at least one memory included in an onboard server, the artificial intelligence model generated from training data sets tuned using queries from airplane passengers; generating, by the artificial intelligence model and in real-time, a response to the query, wherein the response is generated as a text output; converting the text output to an audio output; transmitting the audio output to the passenger; and displaying an assistant graphical character to the passenger, wherein animation of the assistant graphical character is synchronized with the audio output.
10. The method of any one of the examples herein, wherein generating the response to the query comprises generating the response to the query while the onboard server is in a fully offline mode.
11. The method of any one of the examples herein, further comprising: determining how to delegate the query received from the passenger between the artificial intelligence model and a ground-based artificial intelligence model, the ground-based artificial intelligence model generated from training data sets tuned using general queries from users; and delegating at least a portion of the query to the ground-based artificial intelligence model.
12. The method of any one of the examples herein, further comprising: receiving a plurality of queries from a plurality of passengers; determining an order in which to respond to the plurality of queries; and responding to the plurality of queries based on the determined order.
13. The method of any one of the examples herein, wherein the query comprises a request to generate a summary of a first document stored on a personal electronic device and add the generated summary to a second document stored on a personal electronic device, wherein the method further comprises generating a summary of the first document and adding the generated summary to the second document, and wherein the response to the query comprises a notification that the request has been completed.
14. The method of any one of the examples herein, wherein the query comprises a request to generate an itinerary for a destination of the passenger, wherein the method further comprises generating an itinerary for the destination of the passenger, and wherein the response to the query comprises the generated itinerary.
15. A computer-readable medium onboard an airplane storing instructions that, when executed by at least one processor, cause the at least one processor to: receive a query from a passenger on an airplane, wherein the query is received as a user input; convert the user input to a text input; generate, using an artificial intelligence model and in real-time, a response to the query, wherein the artificial intelligence model is implemented on an onboard server, the artificial intelligence model generated from training data sets tuned using queries from airplane passengers, wherein the response is generated as a text output; convert the text output to an audio output; transmit the audio output to the passenger; and display an assistant graphical character to the passenger, wherein animation of the assistant graphical character is synchronized with the audio output.
16. The computer-readable medium of any one of the examples herein, wherein the instructions cause the at least one processor to generate the response to the query while the onboard server is in a fully offline mode.
17. The computer-readable medium of any one of the examples herein, wherein the instructions cause the at least one processor to further: determine how to delegate the query received from the passenger between the artificial intelligence model and a ground-based artificial intelligence model, the ground-based artificial intelligence model generated from training data sets tuned using general queries from users; and delegate at least a portion of the query to the ground-based artificial intelligence model.
18. The computer-readable medium of any one of the examples herein, wherein the instructions cause the at least one processor to further: receive a plurality of queries from a plurality of passengers; determine an order in which to respond to the plurality of queries; and respond to the plurality of queries based on the determined order.
19. The computer-readable medium of any one of the examples herein, wherein the query comprises a request to generate a summary of a first document stored on a personal electronic device and add the generated summary to a second document stored on a personal electronic device, wherein the instructions cause the at least one processor to further generate a summary of the first document and add the generated summary to the second document, and wherein the response to the query comprises a notification that the request has been completed.
20. The computer-readable medium of any one of the examples herein, wherein the query comprises a request to generate an itinerary for a destination of the passenger, wherein the instructions cause the at least one processor to further generate an itinerary for the destination of the passenger, and wherein the response to the query comprises the generated itinerary.

### V. Conclusion

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few implementations and examples are described, and other implementations, enhancements and variations can be made based on what is described and illustrated in this patent document.

## Claims

1. An in-flight entertainment and communication system for providing an artificial intelligence-based in-flight assistant on an airplane, the system comprising:
an onboard server including at least one processor and at least one memory configured to implement an artificial intelligence model, the artificial intelligence model generated from training data sets tuned using queries from airplane passengers; and
an in-flight entertainment and communication (IFEC) device operably coupled to the onboard server and positioned to interact with a passenger, the IFEC device including:
a user input device;
an input recognition module coupled to receive user input from the user input device, convert the user input to a text input, and transmit the text input to the artificial intelligence model;
an audio output device;
a voice synthesis module coupled to receive text output from the artificial intelligence model, convert the text output to an audio output, and transmit the audio output to the audio output device;
a graphical user interface; and
an audio-video processor coupled to generate and display an assistant graphical character on the graphical user interface, wherein the audio-video processor is configured to synchronize with the voice synthesis module such that animation of the assistant graphical character is synchronized with the audio output,
wherein the artificial intelligence model is configured to:
receive a query from the passenger via the input recognition module; and
respond to the query in real-time by managing the assistant graphical character and the audio output via the voice synthesis module and the audio-video processor.

2. The system of claim 1, wherein the artificial intelligence model is configured to respond to the query while the onboard server is in a fully offline mode.

3. The system of claim 1, wherein the onboard server further comprises a communications module operably coupled to the at least one processor and configured to communicate with a ground-based artificial intelligence model, the ground-based artificial intelligence model generated from training data sets tuned using general queries from users, wherein the at least one processor is configured to determine how to delegate the query received from the passenger between the artificial intelligence model on the onboard server and the ground-based artificial intelligence model.

4. The system of claim 3, wherein the at least one processor is configured to determine how to delegate the query based on at least one of memory space availability of the at least one memory, processing power availability of the at least one processor, a nature of the query, availability and stability of bandwidth for wirelessly communicating with the ground-based artificial intelligence model while the airplane is mid-flight, a comparison between an expected response time of the artificial intelligence model on the onboard server and an expected response time of the ground-based artificial intelligence model, or communication delays between the communications module and the ground-based artificial intelligence model.

5. The system of claim 1, wherein the artificial intelligence model is configured to:
receive a plurality of queries from a plurality of passengers;
determine an order in which to respond to the plurality of queries; and
respond to the plurality of queries based on the determined order.

6. The system of claim 5, wherein the artificial intelligence model is configured to determine the order in which to respond to the plurality of queries based on at least one of natures of the queries, identities of the passengers, or an order in which the queries were received.

7. The system of claim 5, wherein the artificial intelligence model is further configured to determine how to delegate processing power of the at least one processor between the queries.

8. The system of claim 1, wherein the graphical user interface is configured to receive inputs from the passenger to customize at least one of an appearance of the assistant graphical character or a voice of the audio output.

9. A method of providing an artificial intelligence-based in-flight assistant on an airplane, the method comprising:
receiving a query from a passenger on an airplane, wherein the query is received as a user input;
converting the user input to a text input;
transmitting the text input to an artificial intelligence model, wherein the artificial intelligence model is implemented by at least one processor and at least one memory included in an onboard server, the artificial intelligence model generated from training data sets tuned using queries from airplane passengers;
generating, by the artificial intelligence model and in real-time, a response to the query, wherein the response is generated as a text output;
converting the text output to an audio output;
transmitting the audio output to the passenger; and
displaying an assistant graphical character to the passenger, wherein animation of the assistant graphical character is synchronized with the audio output.

10. The method of claim 9, wherein generating the response to the query comprises generating the response to the query while the onboard server is in a fully offline mode.

11. The method of claim 9, further comprising:
determining how to delegate the query received from the passenger between the artificial intelligence model and a ground-based artificial intelligence model, the ground-based artificial intelligence model generated from training data sets tuned using general queries from users; and
delegating at least a portion of the query to the ground-based artificial intelligence model.

12. The method of claim 9, further comprising:
receiving a plurality of queries from a plurality of passengers;
determining an order in which to respond to the plurality of queries; and
responding to the plurality of queries based on the determined order.

13. The method of claim 9, wherein the query comprises a request to generate a summary of a first document stored on a personal electronic device and add the generated summary to a second document stored on a personal electronic device, wherein the method further comprises generating a summary of the first document and adding the generated summary to the second document, and wherein the response to the query comprises a notification that the request has been completed.

14. The method of claim 9, wherein the query comprises a request to generate an itinerary for a destination of the passenger, wherein the method further comprises generating an itinerary for the destination of the passenger, and wherein the response to the query comprises the generated itinerary.
